# EUROPEAN PATENT SPECIFICATION

(11) **EP 2 632 806 B1**
(45) Date of publication and mention of the grant of the patent: **27.06.2018**
(21) Application number: 11836828.1
(22) Date of filing: 06.10.2011
(51) Int. Cl.: B65B 25/06, A23B 4/005, A23B 4/06, A23L 5/10, B65B 25/22

(54) **A PROCESS FOR PROCESSING ANIMAL PROTEIN PRODUCT INTO COOKED, SLICED FORM**
VERFAHREN ZUR VERARBEITUNG EINES TIERPROTEINPRODUKTS ZU GEKOCHTEN SCHEIBEN
PROCÉDÉ POUR LE TRAITEMENT DE PRODUITS À BASE DE PROTÉINES ANIMALES SOUS FORME CUITE EN TRANCHES

(30) Priority: 26.10.2010 US 911881
(43) Date of publication of application: 04.09.2013
(73) Proprietor: Cuisine Solutions, Inc., Alexandria, Virginia 22314 (US)
(72) Inventor: GUILLAUD, Jean-Pierre, Alexandria Virginia 22312 (US)
(74) Representative: AWA Sweden AB
(86) International application number: PCT/US2011/055008
(87) International publication number: WO 2012/057979

(56) References cited:
- WO-A1-2010/053595
- CH-A5- 684 985
- GB-A- 848 014
- GB-A- 2 232 572
- US-A- 2 490 951
- US-A- 3 753 741
- US-A- 4 792 457
- US-A- 4 840 805
- US-A- 4 842 872
- US-A- 4 983 411
- US-A- 5 716 657
- US-A1- 2004 156 960
- US-A1- 2004 191 376
- US-A1- 2009 130 276

## Description

### BACKGROUND

This invention relates to a process for processing animal protein product into cooked, sliced form.

### RELATED ART

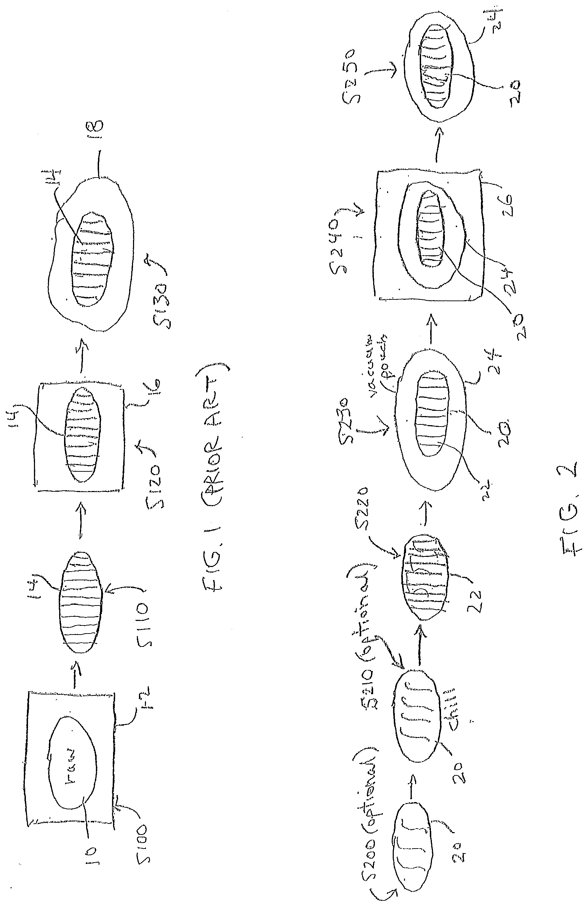

Processes are known, in which a cooked animal protein product is shipped in the form of individual slices. The flow chart of Fig. 1 illustrates a prior art process in which a raw piece 10 of the product is cooked in an oven 12 in step S100. Then, the cooked piece of product is cut into thin, i.e., 1.0-5.0 mm thick, slices 14 in step S110. The sliced product is then heated in an oven 16, not under vacuum, to a pasteurization temperature in step S120, in an effort to to destroy bacteria that may have entered the product during the slicing step. The sliced, pasteurized product is then placed in a package 18 and refrigerated for shipment in step S130.

It would be desirable to provide packages of sliced animal protein product in a more economical manner while also providing a better tasting, more nutritious, less shrunken, and more fully pasteurized product.

US 2004/191376 relates to a method of treating sections of meat which includes forming them into desired shapes and placing them in impervious cook-in bags. The meat sections are cooked in the bags and then chilled down to a refrigerated state where they remain until sold or shipped.

GB 848014 relates to a process for preparing cured pig meat. Raw pig meat is treated in the form of slices having a thickness of 2 to 8 mm with brine containing nitrite ions. The treated slices are vacuum sealed in an air-impermeable plastic bag and cooked while still sealed therein.

US 3753741 relates to a method for preparing sliced, canned meat. The method comprises deboning, trimming, curing and defatting the meat, and pressing and moulding the unsliced meat into a container. The container is vacuum sealed. The meat is cooked in the container to bring the internal temperature of the meat to about 140 °C and thereafter chilled in the container. The chilled meat is cut into uniform slices while retaining the meat in its original unsliced configuration.

US 4983411 relates to a process for sterilizing and vacuum packaging raw meat comprising: vacuum packaging raw meat in a heat shrinkable, ultraviolet transmissive packaging film, exposing the vacuum package to ultraviolet radiation, and exposing the vacuum package to high-temperature atmosphere.

CH 684985 relates to a method for preparing and preserving cooked dishes based on any edible product, characterised in that the foods are introduced raw into a hermetic sachet, which is placed under vacuum, are cooked in a steam (vapour) oven at a temperature and for a period which are specific for each preparation, and are then cooled, without an intermediate stage, down to the temperature of 10 degrees centigrade over a period of from 1 h 30 to 2 h. The preparations thus obtained do not contain additives, colouring agents or emulsifying agents, retain their succulence, are easy to use and have a long shelf life.

GB 2232572 relates to a method of cooking a meat dish comprises the steps of pre-treating the meat by searing so as to seal the juices therein, transferring the sealed meat to a container, adding to the container a suitable volume of liquid having edible additive therein, shrink wrapping or vacuum packaging the combination, heating the resulting combination at a suitable temperature and for a suitable period of time so as to cook the combination, and allowing the cooked combination to cool.

### SUMMARY

Disclosed herein is a process for processing meat, poultry or game product comprising the steps of:
A. searing the product on at least one outside surface;
B. slicing the seared product into slices while the product is in a substantially raw state;
C. vacuum sealing the sliced raw product within a pouch with the slices stacked tightly together;
D. cooking the vacuum sealed product to at least its pasteurization temperature while vacuum sealed in the pouch; and
E. refrigerating or freezing the cooked product still in the pouch, wherein, during the cooking step, the slices are maintained in a tightly stacked face-to-face relationship, such that cut faces of the slices contact one another to essentially maintain the shape of the original product.

### BRIEF DESCRIPTION OF THE DRAWING FIGURES

Fig. 1 is a flow chart describing a conventional process for processing animal protein product.
Fig. 2 is a flow chart describing a new process for processing and packaging animal protein product.

### DETAILED DESCRIPTION OF A PREFERRED EMBODIMENT

In the process described below, a piece of animal protein product is sliced while in a raw state, and only one cooking step is performed, in contrast to prior art processes in which the product is sliced only after being cooked, and then requires subsequent pasteurization. Moreover, a sous-vide cooking process is employed to cook the sliced raw product in a vacuum sealed pouch.

The flow chart of Fig. 2 depicts steps involved in the process. In a first, step S200, a piece of raw product 20 is seared on one or more of its outside surfaces. The searing step is simply for providing some texture such as grill marks. An optional step, i.e., step S210, involves chilling the piece of product, e.g., to a temperature below room temperature, preferably to 32-34°F. In some cases, such as with smoked meats, it has been found that the slicing step discussed below is made easier if the product has been chilled.

The piece of raw product is cut into thin slices 22, e.g. 1.0-5.0 mm thick in a conventional slicing machine in step S220. As discussed above, the slicing step can occur with the product at room temperature or chilled.

The sliced piece of raw product is then vacuum sealed in a pouch 24 in step S230 and is then cooked in step S240, while vacuum sealed in the pouch, to at least a pasteurization temperature of the product. During step S240, the slices are maintained in a tightly stacked face-to-face relationship. That is, the cut faces of the slices contact one another to essentially maintain the shape of the original piece of product.

Step S240 of cooking the animal protein product in a vacuum sealed pouch is a sous-vide process. This sous-vide process differs from known sous-vide processes in that this process is performed on a sliced product and at or above a pasteurization temperature of the product.

In this sous-vide process, cooking is preferably performed in a heated water bath 26 heated to at least the pasteurization temperature of the product, although other ways of heating the sealed product could be used.

In this sous-vide process, the product is cooked while in a sealed pouch, which allows the cellular structure of the product to remain intact. Natural moisture and juices are retained, which improves taste, retains nutritional content, and minimizes shrinkage. Additionally, the product is more fully pasteurized when the pasteurization takes place during this sous-vide process than in a prior art pasteurization process.

Heretofore, known sous-vide processes have only been performed on single pieces of animal protein product, rather than on a sliced product. The inventor was unable to successfully process sliced fish, for example, using this sous-vide process because substances in the slices tended to fuse or coagulate together when cooked in a vacuum sealed state. Surprisingly, however, other animal protein products, such as sliced meat (e.g., beef, pork and lamb) and sliced poultry (e.g., chicken and turkey) were able to be cooked by this sous-vide process without the slices coagulating together. Rather, they are easily separable. Other animal protein products such as sliced game (e.g., venison, snake, duck, and goose) can also be processed via this sous-vide process.

Following the cooking steps in step S240, the product is refrigerated or frozen, while in the pouch 24, in step S250. The refrigerated or frozen product can then be shipped.

It will be appreciated that the above-described sous-vide process involves only a single cooking step for providing a pre-cooked, sliced animal protein product, thereby reducing cost and energy as compared to the prior art process of Fig. 1.

## Claims

1. A process for processing meat, poultry or game product, comprising the steps of:
A. searing at least one outside surface of the product;
B. slicing the seared product into slices while in a substantially raw state;
C. vacuum sealing the sliced raw product within a pouch with the slices stacked tightly together;
D. cooking the vacuum sealed product to at least its pasteurization temperature while vacuum sealed in the pouch; and
E. refrigerating or freezing the cooked product still in the pouch, wherein, during the cooking step, the slices are maintained in a tightly stacked face-to-face relationship, such that cut faces of the slices contact one another to essentially maintain the shape of the original product.

2. The process according to claim 1, wherein the slices of step A are 1.0-5.0 mm thick.

3. The process according to claim 1, wherein the product is meat.

4. The process according to claim 1, wherein the product is poultry.

5. The process according to claim 1, wherein the product is game.

## Patentansprüche

1. Verfahren zum Verarbeiten von Fleisch-, Geflügel- oder Wildprodukten mit folgenden Schritten:
A. scharfes Anbraten mindestens einer äußeren Oberfläche des Produkts,
B. Schneiden des angebratenen Produkts in im Wesentlichen rohem Zustand in Scheiben,
C. Vakuumverpacken des geschnittenen rohen Produkts in einem Beutel, in dem die Scheiben dicht aneinander gestapelt werden,
D. Kochen des vakuumverpackten Produkts zumindest bei seiner Pasteurisierungstemperatur, während es in dem Beutel vakuumverpackt ist, und
E. Kühlen oder Einfrieren des gekochten Produkts im Beutel, wobei die Scheiben beim Kochen direkt aneinanderliegend dicht aneinander gestapelt bleiben, so dass sich Schnittflächen der Scheiben berühren und so die Form des Ausgangsprodukts im Wesentlichen erhalten bleibt.

2. Verfahren nach Anspruch 1, wobei die Scheiben aus Schritt A 1,0 bis 5,0 mm dick sind.

3. Verfahren nach Anspruch 1, wobei es sich bei dem Produkt um Fleisch handelt.

4. Verfahren nach Anspruch 1, wobei es sich bei dem Produkt um Geflügel handelt.

5. Verfahren nach Anspruch 1, wobei es sich bei dem Produkt um Wild handelt.

## Revendications

1. Processus permettant de traiter un produit de viande, de volaille ou de gibier, comprenant les étapes consistant à :
A. griller au moins une surface externe du produit ;
B. découper le produit grillé en des tranches pendant qu'il se trouve dans un état essentiellement cru ;
C. sceller sous vide le produit cru en tranches dans une pochette avec les tranches solidement empilées ensemble ;
D. cuisiner le produit scellé sous vide à au moins sa température de pasteurisation tout en étant scellé sous vide dans la pochette ; et
E. réfrigérer ou congeler le produit cuisiné encore dans la pochette,
dans lequel, pendant l'étape de cuisson, les tranches sont maintenues dans une relation face-à-face de manière solidement empilée, de sorte que les faces coupées des tranches sont en contact l'une avec l'autre pour maintenir essentiellement la forme du produit original.

2. Processus selon la revendication 1, dans lequel les tranches de l'étape A ont une épaisseur comprise entre 1,0 et 5,0 mm.

3. Processus selon la revendication 1, dans lequel le produit est de la viande.

4. Processus selon la revendication 1, dans lequel le produit est de la volaille.

5. Processus selon la revendication 1, dans lequel le produit est du gibier.
